# EUROPÄISCHE PATENTSCHRIFT

(11) **EP 1 952 163 B1**
(45) Veröffentlichungstag und Bekanntmachung des Hinweises auf die Patenterteilung: **16.06.2010**
(21) Anmeldenummer: 06819546.0
(22) Anmeldetag: 16.11.2006
(51) Int. Cl.: G01P 3/487, G01D 5/244

(54) **VERFAHREN ZUR BESTIMMUNG DES ENCODER-ABBILDUNGSFEHLERS IM MAGNETISCHEN LUFTSPALT EINES RADDREHZAHLERFASSUNGSSYSTEMS**
METHOD FOR DETERMINING THE ENCODER MAPPING ERROR IN THE MAGNETIC AIR GAP OF A WHEEL SPEED SENSING SYSTEM
PROCEDE DE DETERMINATION DES ERREURS D'ENCODAGE D'IMAGERIE DANS L'ENTREFER MAGNETIQUE D'UN SYSTEME DE DETECTION DE LA VITESSE DE ROTATION D'UNE ROUE

(30) Priorität: 18.11.2005 DE 102005055582; 03.08.2006 DE 102006036270
(43) Veröffentlichungstag der Anmeldung: 06.08.2008
(73) Patentinhaber: Continental Teves AG & Co. oHG, 60488 Frankfurt (DE)
(72) Erfinder: GRIESSER, Martin, 65760 Eschborn (DE); LOHBERG, Peter, 61381 Friedrichsdorf (DE)
(74) Vertreter: Brand, Markus
(86) Internationale Anmeldenummer: PCT/EP2006/068569
(87) Internationale Veröffentlichungsnummer: WO 2007/057429

(56) Entgegenhaltungen:
- EP-A2- 1 130 362
- US-A1- 2004 100 251
- US-B1- 6 668 666

## Beschreibung

Die Erfindung betrifft ein Verfahren gemäß Oberbegriff von Anspruch 1, sowie ein Computerprogrammprodukt zur Bestimmung des Encoder-Abbildungsfehlers im magnetischen Luftspalt eines Raddrehzahlerfassungssystems.

Die Bestimmung von Raddrehzahlen in Kraftfahrzeugen ist eine weit verbreitete Anwendung und wird beispielsweise in Kraftfahrzeugbremssystemen wie ABS und Systemen zur Verbesserung der Fahrstabilität wie zum Beispiel ESP vorgenommen. Dabei hat die Qualität der Raddrehzahlsensordaten für die Wirksamkeit eines solchen Regelungssystems entscheidende Bedeutung.

Drehzahlerfassungssysteme sind aus dem Druckschriften EP 1130362, US2004/0100251 und US 6668666 bekannt.

Zur Gewährleistung oder Verbesserung der Datenqualität in Raddrehzahlerfassungssystemen spielen bekanntermaßen die Toleranzen der Systemkomponenten, die Toleranzen des gesamten Systems, sowie die Qualität der Montage eine entscheidende Rolle. Leider ist die Beschaffung von Komponenten und Systemen, welche sehr geringen Fertigungstoleranzen genügen, teuer. Weitere Steigerungen in diesem Bereich zur Verbesserung der Datenqualität sind dabei besonders kostenintensiv. Auch im Bereich der Montage sind Qualitätssteigerungen teuer und außerdem sind diese im Speziellen durch den menschlichen Arbeitseinsatz relativ schwer dauerhaft zu gewährleisten.

Es ist bekannt, dass das durch einen rotierenden Encoder mit inkrementeller Codierung modulierte Magnetfeld fehlerbehaftet ist. Dabei werden die Polteilungsfehler, mit denen solche Encoder produktionsbedingt behaftet sind, vom Sensor über den Luftspalt, in Abhängigkeit von der Luftspaltlänge verschwommen erfasst. Für sehr kleine Luftspalte wird dieser Polteilungsfehler nahezu unverfälscht durch den Sensor erfasst. Mit wachsender Luftspaltlänge steigt die Unschärfe der Erfassung allerdings überproportional an, so dass der Abbildungsfehler für große Luftspalte ein vielfaches des Maximalwertes der Polteilungsfehler ist, mit denen der Encoder auf Grund seiner materiellen Ausbildung behaftet ist. Es ist derzeit nicht mit wirtschaftlich sinnvollem Aufwand möglich, die Polteilungsfehler eines Encoders so gering zu halten, dass der Abbildungsfehler über einen Luftspalt mit großer Länge kaum anwächst. Während der Bewegung eines Encoders erfasst der ihn beobachtende Sensor entsprechend der Encoderbewegung eine Vielzahl von Polteilungsfehlern, welche ein Polteilungsrauschen bilden. Dieses Polteilungsrauschen nimmt analog zu einem einzelnen Polteilungsfehler überproportional mit der Luftspaltlänge zu. Daraus ergibt sich für den beobachtenden Sensor bezogen auf die zu erfassenden Polteilungen des Encoders über eine bestimmte Luftspaltlänge eine Verschlechterung des Signal-Rausch-Abstandes. Dieser steigt auch überproportional mit der Luftspaltlänge an. Es hat sich herausgestellt, dass der Pegel des Rauschens der Abbildungen der Polteilungen des Encoders direkt abhängig von der Luftspaltlänge ist.

Die Aufgabe der vorliegenden Erfindung besteht darin, ein Verfahren zur Bestimmung des Abbildungsfehlers eines Encoders in einem Raddrehzahlerfassungssystem vorzuschlagen, wobei die Bewegungen eines Encoders über einen Luftspalt von mindestens einem Raddrehzahlsensor erfasst werden. Dabei soll das Verfahren gegebenenfalls weiterführend dazu dienen, ein Kraftfahrzeugregelungssystem bzw. dessen Programm an den oder die verfahrensgemäß bestimmten Encoder-Abbildungsfehler zu adaptieren.

Die Aufgabe wird erfindungsgemäß gelöst durch das Verfahren gemäß Anspruch 1.

Der Erfindung liegt der Gedanke zu Grunde mindestens einen Raddrehzahlsensor zu verwenden, der so ausgelegt ist, dass dieser sowohl die Bewegungen des magnetischen Encoders erfassen, als auch die mittlere magnetische Feldstärke im Luftspalt messen kann. Während eines konkreten Fahrzustandes des Kraftfahrzeugs misst der Raddrehzahlsensor die mittlere Magnetfeldstärke im Luftspalt, wonach der tatsächliche Abbildungsfehler der Polteilung des Encoders, mit dem die Daten des Raddrehzahlsensors behaftet sind, aus der mittleren Magnetfeldstärke im magnetischen Luftspalt und der Auswertung einer Referenzkennlinie, welche elektronisch gespeichert ist und den Zusammenhang zwischen normierter Luftspaltlänge und Abbildungsfehler und normierter Feldstärke angibt, ermittelt wird.

Nach dem Einbau können die tatsächlichen Abbildungsfehler der Raddrehzahlerfassungssysteme bezüglich aller Räder stark streuen. Durch das vorgeschlagene Verfahren können sowohl unzulässig hohe Abbildungsfehler erkannt werden und auf diese reagiert werden, als auch das messtechnische Potential geringer Abbildungsfehler besser genutzt werden. Es ist möglich die verfahrensgemäß gewonnenen Ist-Werte der Abbildungsfehler, statt der bislang üblichen maximal zulässigen pauschalen Grenzwerte als Daten für das Kraftfahrzeugregelungssystem zu verwenden. Dadurch kann der jeweilige Fahrzeugzustand besser erkannt werden und die Regelgenauigkeit des elektronischen Kraftfahrzeugregelungssystems wird verbessert. Auch bei der Erkennung des Reifendrucks und der Beurteilung der Funktionsfähigkeit oben genannter Systeme kann die Berücksichtigung der tatsächlichen Abbildungsfehler die Datenqualität verbessern. Aus diesen Maßnahmen folgt insgesamt eine höhere Eigensicherheit und höhere Effektivität des gesamten Bremssystems. Allgemein ist es ein Nutzen der Erfindung, dass die verfahrensgemäß bestimmten Ist-Werte des jeweiligen Encoder-Abbildungsfehlers einen höheren Informationsgehalt aufweisen als unter Berücksichtigung der Toleranzen angenommene Grenzwerte für Encoder-Abbildungsfehler.

Erfindungsgemäß werden magnetfeldempfindliche, insbesondere aktive, Sensoren als Raddrehzahlsensoren verwendet. Aktive Sensoren für den Kfz-Bereich sind mehrfach bekannt. Es gibt sie in 2-Draht-Ausführung und in 3-Draht-Ausführung. Die Beschreibung der Erfindung erfolgt am Beispiel der 2-Draht-Ausführung, wie sie für Bremssysteme üblich ist. Es ist jedoch im Sinn der Erfindung, den Grundgedanken auch auf 3-Draht-Ausführungen anzuwenden, die z.B. bei Motor- und / oder Getriebeanwendungen verbreitet ist. Darüber hinaus sind auch weitere Sensorausführungen möglich und durch den Begriff des Raddrehzahlsensors mit abgedeckt. Des Weiteren werden unter dem Begriff Raddrehzahlsensoren auch Sensoren verstanden, welche insbesondere Elektronik zur Signal-, bzw. Datenverarbeitung aufweisen. Magnetfeldempfindliche Sensoren gibt es auf Basis des Hall-Effektes oder eines der verschiedenen magnetoresistiven Effekte, insbesondere des anisotropen magnetoresistiven Effektes. Eine, insbesondere in den Sensor integrierte, elektronische Schaltung setzt die Widerstandsänderungen, welche sich aus dem sich ändernden, vom Sensor erfassten Magnetfeld ergeben, in zwei unterschiedliche Strompegel um, die als Ausgangssignal selbst oder Teil eines komplexeren Ausgangssignals die Aufeinanderfolge von z.B. Zahnhöhe und Zahnlücke oder Nordpol und Südpol abbilden.

Unter einem magnetischen Encoder wird ein Maschinenelement verstanden, das einen, insbesondere inkrementalen, Winkelmaßstab trägt. Als Encoder können zum einen ferromagnetische Zahnräder oder Lochscheiben dienen, die in Kombination mit einem Permanentmagneten einen veränderlichen magnetischen Luftspalt erzeugen, zum anderen können es eine ganzzahlige Folge permanent magnetisierter Nord/Südpol-Areale sein, die in alternierender Folge eine zum Kreis geschlossene Encoderspur bilden, welche z.B. in eine Radlagerdichtung eingebracht ist. Im übertragenen Sinne dient der magnetische Encoder als Impulsgeber innerhalb des Raddrehzahlerfassungssystems.

Unter einem Abbildungsfehler wird der oben beschriebene Encoder-Abbildungsfehler verstanden, welcher sich hinsichtlich der Erfassung von Encoderbewegungen durch einen mit dem Encoder magnetisch gekoppelten Raddrehzahlsensor über einen Luftspalt bestimmter Länge ergibt. Dabei erscheinen die Polteilungen des Encoders in Abhängigkeit der Luftspaltlänge für den Sensor als unscharf.

Unter einem Polteilungsfehler eines Encoders werden die Toleranzen des inkrementalen Winkelmaßstabs verstanden, welche sich beispielsweise in Unregelmäßigkeiten der Pollängen äußern. Der Begriff Polteilungsfehler entspricht insbesondere den Begriffen Einzelteilungsfehler und Teilungseinzelabweichung.

Unter einem konkreten Fahrzustand des Kraftfahrzeuges wird ein bestimmter Zustand des Kraftfahrzeugs verstanden, der zu einem bestimmten Zeitpunkt vorherrscht oder eine Momentaufnahme bzw. ein zeitlich diskreter Zustand, insbesondere ohne definierte Randbedingungen. Dieser Fahrzustand kann alternativ insbesondere durch spezielle Parameter des Kraftfahrzeugs, wie Geschwindigkeit, Gierrate, Längs-, Querbeschleunigung, Radkräfte, welche sich im Wesentlichen aus Motormoment, Motordrehzahl und Getriebeübersetzung berechnen lassen, und Parameter bezüglich des Wartungszustandes des Kraftfahrzeugs näher definiert sein. Dabei können diese Parameter einzeln oder in Kombination berücksichtigt werden.

Es ist zweckmäßig, dass die Ermittlung der mittleren magnetischen Feldstärke im magnetischen Luftspalt durch den Sensor während eines konkreten Fahrzustandes des Kraftfahrzeugs stattfindet, bei dem sich das Kraftfahrzeug in einem gleichförmigen Fahrzustand befindet. Diese Ermittlung der mittleren magnetischen Feldstärke und der anschließend erfindungsgemäß bestimmte Encoder-Abbildungsfehler werden in der ECU abgespeichert. Die Ermittlung der mittleren magnetischen Feldstärke findet dabei insbesondere mit Startbetrieb, bzw. im Wesentlichen nach Aktivierung der Zündung des Kraftfahrzeugs statt.

Bevorzugt ist der Raddrehzahlsensor ein aktiver Sensor.

Vorzugsweise weist der magnetische Encoder selbst einen Polteilungsfehler von weniger als 2% auf. Durch diese Vorgabe wird weitgehend sichergestellt, dass der Abbildungsfehler für übliche Luftspaltlängen innerhalb bestimmter für das Kraftfahrzeugregelungssystem erforderlicher Grenzen bleibt.

Bevorzugt wird die Referenzkennlinie, die in der elektronischen Kontrolleinheit (ECU) gespeichert ist, mit gleichen Komponenten des Raddrehzahlerfassungssystems zunächst für einen bestimmten Fahrzeugtyp oder eine bestimmte Fahrzeugklasse über das Raddrehzahlerfassungssystem eines Typs/einer Klasse festgelegt bzw. aufgenommen, wobei dieses vor dem Einbau in das Fahrzeug geschieht. Dieses Vorgehen steigert die Genauigkeit der Referenzkennlinie und berücksichtigt typ-/ klassenspezifische Besonderheiten.

Bevorzugt wird das jeweilige Kraftfahrzeugregelungssystem, insbesondere ABS, ASR, oder ESP-System, an den jeweiligen tatsächlichen Abbildungsfehler der Polteilung des jeweiligen Encoders adaptiert.

Es ist zweckmäßig, dass innerhalb des Raddrehzahlsensors die magnetische Feldstärke im Luftspalt in Intervalle eingeteilt wird, welche bitcodiert sind und welche Bereiche angeben, in denen das Feldstärkesignal sinnvoll innerhalb einer festen Anzahl von Intervallen codiert werden kann. Diese Feldstärkeintervalle bieten die Möglichkeit dass für die Regelung definierte Grenzabbildungsfehler identifiziert sind und dass bei Verlassen eines Feldstärkeintervalls die Regelung gezielt reagieren kann und nicht kontinuierlich auf für die Regelung unbedeutende Feldstärkeschwankungen bzw. Abbildungsfehlerschwankungen reagieren muss.

Das jeweilige Kraftfahrzeugregelungssystem schaltet vorzugsweise in Abhängigkeit des tatsächlichen Encoder-Abbildungsfehlers interne Algorithmen um und wählt in Abhängigkeit des tatsächlichen bzw. ermittelten Encoder-Abbildungsfehlers Daten aus bereits gespeicherten Datensätzen aus.

Es wird bevorzugt, dass das jeweilige Kraftfahrzeugregelungssystem oder die elektronische Kontrolleinheit (ECU) innerhalb bestimmter Zeitabstände, insbesondere innerhalb eines bestimmten Regelungszyklus, selbstständig eine neue Berechnung des tatsächlichen Encoder-Abbildungsfehlers initiiert und diesen abspeichert.

Es ist zweckmäßig, dass die Werte der tatsächlichen, während der Fahrt ermittelten, Encoder-Abbildungsfehler für jede Achse oder für jeweils alle Räder aufgenommen und elektronisch abgespeichert werden. Die aufgenommenen Kennlinien sind ein Maß für das Polteilungsgrundrauschen der Encoder als Funktion der eingestellten Luftspaltlänge, bzw. beschreiben den funktionalen Zusammenhang zwischen Abbildungsfehler und Luftspaltlänge für im Wesentlichen definierte Randbedingungen.

Für die Adaption des Kraftfahrzeugregelungssystems wird bevorzugt ein Encoder-Abbildungsfehler, nämlich entweder der Größte oder der Kleinste, verwendet, auch wenn die Encoder-Abbildungsfehler der jeweiligen Raddrehzahlerfassungssysteme unterschiedlich sind.

Es ist zweckmäßig, dass der zeitliche Verlauf der magnetischen Feldstärke im Luftspalt als Funktion des Encoderdrehwinkels erfasst wird, wobei periodische Schwankungen der magnetischen Feldstärke erfasst werden und dass die periodischen Schwankungen der magnetischen Feldstärke im Luftspalt durch das Raddrehzahlerfassungssystem oder das Kraftfahrzeugregelungssystem kompensiert werden. Hierdurch können z.B. die Auswirkungen eines exzentrischen Versatzes der Encoderspur bezüglich der Drehachse kompensiert werden.

Es ist bevorzugt die Regelschwellen des Kraftfahrzeugregelungssystems an den maximalen oder minimalen tatsächlichen Encoder-Abbildungsfehler aller vier Raddrehzahlerfassungssysteme zu adaptieren.

Es ist zweckmäßig, dass die Adaption des Kraftfahrzeugregelungssystems und seiner Regelschwellen in Abhängigkeit des Encoder-Abbildungsfehlers, wobei ein Mittelwert oder der kleinste oder der größte Wert verwendet werden kann, für alle Räder oder achsenweise oder diagonal durchgeführt wird, wobei insbesondere der durch den tatsächlichen Encoder-Abbildungsfehler hervorgerufene maximal mögliche Fehler eines Schwellenkennwertes, zur idealen Schwelle, die den tatsächlichen Wert darstellt, bei dem die Regelung einsetzen soll, addiert wird. Durch diese Maßnahme kann z.B. bei Adaption an den maximalen Wert eine theoretische Möglichkeit der Fehlregelung aufgrund von Encoder-Abbildungsfehlern weitestgehend ausgeschlossen werden.

Bevorzugt erfolgt aufgrund unterschiedlicher Encoder-Abbildungsfehler eine definierte Abschaltung der Regelung, wobei das Kraftfahrzeug in einem stabilen Fahrzustand bleibt oder durch übliche "Failsafe"-Regelalgorithmen in einen stabilen Fahrzustand überführt wird. Diese Maßnahme erhöht die Sicherheit der Regelung und trägt dazu bei, Fehlregelungen weitestgehend auszuschließen.

Es ist zweckmäßig, dass der tatsächliche Encoder-Abbildungsfehler in die Berechnung zur Erkennung eines Reifendruckverlustes eines indirekt messenden Reifendruckverlusterkennungssystems (DDS) einfließt, wodurch sich die Präzision eines solchen DDS-Systems erhöhen lässt.

Bevorzugt wird die Informationsmenge, welche für die Beurteilung eines potentiellen Reifendruckverlustes aus dem Raddrehzahlsignal herangezogen wird, an den Encoder-Abbildungsfehler, insbesondere proportional, angepasst, wodurch zur Beurteilung eines möglichen Reifendruckverlustes immer nur so viele Daten, welche eine bestimmte zurückgelegte Wegstrecke repräsentieren, wie nötig herangezogen werden, aber auch gleichzeitig so wenige Daten wie möglich.

Es ist zweckmäßig, dass der von dem jeweiligen Raddrehzahlerfassungssystem ermittelte Encoder-Abbildungsfehler und dessen zeitlicher Verlauf zur Beurteilung der eigenen Funktionstüchtigkeit, insbesondere der Drehrichtungserkennung und der Regelschwellen, eingesetzt wird.

Die Erfindung bezieht sich auch auf ein Computerprogrammprodukt, welches einen Algorithmus umfasst, der zur Durchführung des erfindungsgemäßen Verfahrens geeignet ist.

Das erfindungsgemäße Verfahren kann für alle Arten von Fahrzeugen, welche mindestens ein entsprechendes Raddrehzahlerfassungssystem aufweisen, verwendet werden. Darunter fallen insbesondere Kraftfahrzeuge, wie Personenkraftwagen, Lastkraftwagen, alle Arten von Anhängern, sowie einspurige Kraftfahrzeuge, wie Krafträder. Die Verwendung des vorgeschlagenen Verfahrens ist besonders dann sinnvoll, wenn entweder eine Steigerung der Datenqualität von Kraftfahrzeugregelungssystemen erreicht werden soll, welche auf Raddrehzahlerfassungssysteme zurückgreifen oder wenn eine definierte Datenqualität erreicht werden soll, aber dafür durch Nutzung des erfindungsgemäßen Verfahrens Raddrehzahlerfassungssysteme, insbesondere Magnet-Encoder, mit größeren Toleranzen verwendet werden können. Dieses ist besonders zweckmäßig im Segment von Low-Cost-Kraftfahrzeugen.

Weitere bevorzugte Ausführungsformen ergeben sich aus den abhängigen Ansprüchen und der nachfolgenden Beschreibung von Ausführungsbeispielen an Hand von Figuren.

Es zeigen in schematischer Darstellung
- Fig. 1: ein Raddrehzahlerfassungssystem, welches mit der ECU verbunden ist,
- Fig. 2: den funktionalen Zusammenhang zwischen Luftspalt- länge und Abbildungsfehler in einem Raddrehzahler- fassungssystem,
- Fig. 3: den funktionalen Zusammenhang zwischen normierter Luftspaltlänge, normierter Feldstärke und Abbil- dungsfehler und
- Fig. 4: den funktionalen Zusammenhang zwischen normierter Luftspaltlänge und Abbildungsfehler, wobei die normierte Luftspaltlänge in Intervalle aufgeteilt ist, denen jeweils ein binäres Codewort zur Iden- tifikation des Intervalls zugeordnet ist.

Einige der im Folgenden beschriebenen beispielhaften Ausführungsformen, insbesondere Beispiele der Kraftfahrzeugregelung, sind nicht durch Figuren veranschaulicht.

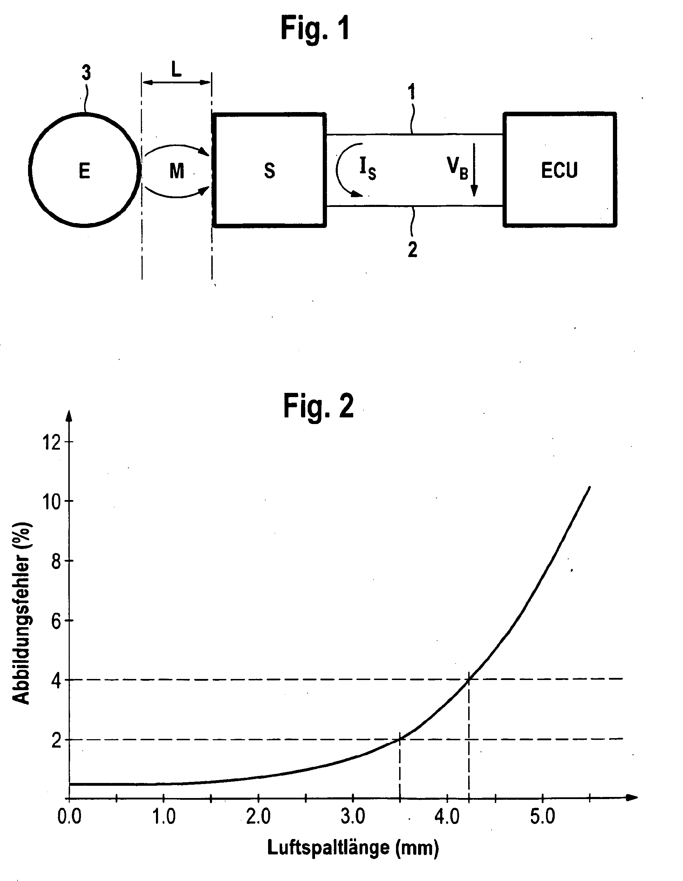

Fig. 1 zeigt ein Beispiel für den Stand der Technik von Raddrehzahlerfassungssystemen im Kfz-Bereich. Hierbei sind ein Sensor S des Raddrehzahlerfassungssystems und die elektronische Kontrolleinheit ECU des Kraftfahrzeugregelungssystems über eine Zweidrahtleitung 1, 2 elektrisch miteinander verbunden. Zum Betrieb des Sensors ist eine Betriebsspannung V_{B} erforderlich, die von der ECU an den Leitungen 1, 2 bereitgestellt wird. Die Encoderspur 3 ist mit dem internen magnetisch sensitiven Element des Sensors S über einen Luftspalt L gekoppelt. Im Luftspalt ist die durch den Encoder modulierte magnetische Luftspaltfeldstärke M wirksam. Über den Sensor S fließt ein Signalstrom I_{S} zur ECU zurück, dessen Stärke durch den Sensor S in Abhängigkeit der erfassten Rotation des Encoders E, moduliert wird und in der ECU dekodiert wird.

Fig. 2 veranschaulicht beispielhaft den funktionalen Zusammenhang zwischen Abbildungsfehler und Luftspaltlänge. Die Abbildung der durch den aktiven Sensor erfassten Encoderspur ist mit einem Fehler behaftet, der mit wachsender Luftspaltlänge überproportional ansteigt. Der gezeigte funktionale Zusammenhang ist eine experimentell aufgenommene Kennlinie einer magnetisierten Radlagerdichtung in Kombination mit einem handelsüblichen aktiven Sensor. Auf der Abszisse ist die Luftspaltlänge in mm aufgetragen. Auf der Ordinate ist der Abbildungsfehler der Polteilung in % aufgetragen. Es handelt sich in dieser Darstellung um den, über die steigende Luftspaltlänge zunehmend fehlerhaft abgebildeten, Maximalwert der Polteilungsfehler bezüglich der Encoderperioden. Jedem Encoder haftet ein produktionsbedingter geringer Polteilungsfehler an (hier etwa max. 0,5%), der im Bereich geringer Luftspaltlängen durch den Sensor nahezu unverfälscht abgebildet werden kann. Mit zunehmendem Luftspaltmaß erscheint dieser Polteilungsfehler jedoch immer größer, z.B. werden über 5 mm Luftspaltlänge bereits ca. 8% max. Polteilungsfehler gemessen. Dieser Effekt ist in kleinen Unregelmäßigkeiten der magnetisch wirksamen Struktur der Encoderspur begründet, die sich im Bereich größerer Luftspalte stärker auswirkt als im Nahfeld. Bezüglich des gegenwärtigen Stands der Technik wird vorausgesetzt, dass die Encoder-Sensor-Schnittstelle so ausgelegt ist, dass ein bestimmter maximaler prozentualer Abbildungsfehler nicht überschritten wird. Hierbei sind 2% ein üblicher Wert für die Erkennung von Reifendruckverlusten, Schlechtwegstrecken und 4% für das Erkennen plötzlicher Veränderungen der Raddrehzahl bei elektronischen Bremsregelungen. In Fig.2 dürften daher unter Bezug auf diese speziellen Abbildungsfehler bei der Auslegung unter Verwendung des beispielhaften Encoders 3,5 mm maximaler dynamischer Einbauluftspalt zur Einhaltung der 2% nicht überschritten werden, während für 4% noch 4,25 mm Einbauluftspalt tolerierbar wären. Beispielgemäß werden zur Aufnahme bzw. Erfassung des funktionalen Zusammenhangs zunächst bei im Wesentlichen störungsfreien Rollzustand für die beiden spezifischen Raddrehzahlerfassungssysteme eines Fahrzeugtyps (Hinterachse, Vorderachse) die Abbildungsfehler der Polteilung des jeweiligen Encoders als Funktion der Luftspaltlänge einmalig über eine Messreihe experimentell ermittelt und als zwei Kennlinien in allen Reglern der elektronischen Bremssysteme dieser Fahrzeugklasse abgespeichert. Alternativ beispielhaft wird mit Startbetrieb eines individuellen Fahrzeugs eines Fahrzeugtyps von jedem seiner vier Raddrehzahlsensoren die individuelle mittlere magnetische Feldstärke im Luftspalt gemessen und aus diesen Feldstärken mit Hilfe der dem jeweiligen Sensor zugehörigen abgespeicherten Kennlinie der radspezifische Istwert des Polteilungs-Grundrauschens ermittelt bzw. berechnet und danach radindividuell zugeordnet in der ECU abgespeichert. Bis zur bzw. während der Ermittlung der Istwerte arbeitet der Regler mit Initialwerten, die den dem heutigen Stand der Technik entsprechenden Schwellwertfestlegungen entsprechen. Nach erfolgter Ermittlung der Istwerte ersetzen diese die Initialwerte. Der in Fig. 2 dargestellte beispielhafte funktionale Zusammenhang zwischen Abbildungsfehler und Luftspaltlänge ist eine Referenzkurve, welche einen mittleren Verlauf bezüglich der ihr zugrunde liegenden Messreihen aufweist. Der eigentliche Verlauf des funktionellen Zusammenhanges zwischen Abbildungsfehler und Luftspaltlänge unterliegt einer hier nicht dargestellten Streuung. Vorzugsweise werden diese Streuwerte in der Praxis erfasst und beispielsweise als Mittelwert und/oder Standardabweichung in der ECU gespeichert. Die Mittelwerte und die Streuung werden insbesondere bei der Durchführung des Verfahrens berücksichtigt. Die Aufnahme der Kurve erfolgt bevorzugt einmalig unter definierten Bedingungen, insbesondere in einem Labor, wobei die mindestens eine Messreihe mit einer definierten Anzahl von Encodern und Sensoren des/der für den Einsatz im Sensor vorgesehenen Types/Typen durchgeführt wird. Die Referenzkurve kann sich dabei beispielhaft auf jeweils einige Stützwerte für definierte Luftspaltlängen stützen. Die Referenzkurve kann vorzugsweise alternativ aus maximalen oder minimalen Werten der Streuung, insbesondere unter Durchführung einer Mittelwertbildung, oder aus einer Mittelwertbildung bezüglich der gesamten Streuung gebildet werden. Insbesondere beinhaltet die Bildung der Referenzkurve eine Scharmittelwertbildung. Alle Werte werden besonders bevorzugt in der ECU gespeichert und werden ganz besonders bevorzugt durch definierte Algorithmen zur Durchführung des Verfahrens herangezogen.

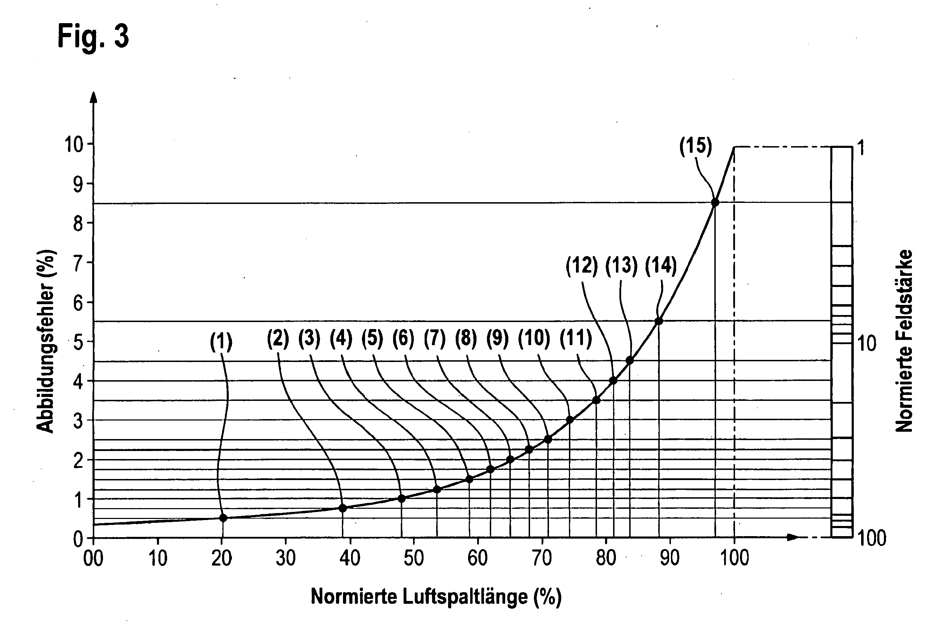

Fig. 3 zeigt die Vorgehensweise anhand eines Verfahrensbeispiels. Der zu Fig. 2 entsprechende Verlauf der Funktion des Abbildungsfehlers in Abhängigkeit der Luftspaltlänge ist hier unter Normierung der Luftspaltlänge auf den Grenzluftspalt dargestellt, wobei als Grenzluftspalt derjenige Luftspalt verstanden wird, bei dem die Feldstärke des durch den Encoder modulierten Magnetfeldes gerade noch ausreicht, um alle Inkremente der Encoderspur im Raddrehzahlsignal abzubilden. Diese Feldstärke wird als Grenzfeldstärke oder Mindestfeldstärke bezeichnet. Bei weiterer Verringerung der Feldstärke, würde das Signal mindestens einen Drehzahlimpuls nicht aufweisen, was unbedingt zu vermeiden ist. Diesem Grenzluftspalt ist der normierte Wert 100% ("nutzbarer Luftspalt") und zugleich ein normierter minimaler Grenzfeldstärkefaktor = 1 zugeordnet, was bedeutet, dass das durch den Encoder modulierte Magnetfeld gerade noch ein Mal diejenige Minimalfeldstärke besitzt, die ein Betrieb im Grenzluftspalt erfordert. Zwischen der normierten Feldstärke (im Luftspalt) und der Funktion des Abbildungsfehlers in Abhängigkeit der Luftspaltlänge besteht ein logarithmischer Zusammenhang.

Dies ist aus der Skalierung der rechtsseitigen Ordinate zu ersehen. Es wird die Erkenntnis genutzt, dass der in Fig.3 dargestellte physikalische Zusammenhang diese Normierung erlaubt, also für Encoder unterschiedlicher Module (Modul = Lesespurdurchmesser/ Zähnezahl) stets ähnlich ist. Insbesondere gilt dies für magnetisierte Encoder. Der Raddrehzahlsensor ist mit einer internen Feldstärkemesseinrichtung versehen, die der jeweiligen Regelung angepasst ist und auf unterschiedliche diskrete Schwellwerte eingestellt ist. Jedem einzelnen Schwellwert ist elektronisch eine Zahlenkodierung zugeordnet, die in einem Datenprotokoll in Verbindung mit dem Raddrehzahlsignal an die ECU gesendet wird. Dabei werden die Bits des die diskrete mittlere Luftspaltfeldstärke repräsentierenden Codewortes beispielgemäß zeitlich zwischen den Raddrehzahlimpulsen mit definierter, von den Raddrehzahlimpulsen abweichender Amplitude, übertragen. In der ECU kann dann mit Hilfe der zugehörigen gespeicherten Referenzkennlinie sowohl auf die reale Luftspaltlänge als auch zugleich auf das zugehörige Polteilungsrauschen geschlossen werden, welche sich bezüglich der diskreten, normierten Feldstärke, als diskretes Wertepaar darstellen. Es ist alternativ beispielgemäß möglich, die Schwellwert-Stützstellen linear über die Luftspaltlänge zu verteilen. Im dargestellten Beispiel nach Fig. 3 ist die Verteilung der Stützstellen 1 bis 15 allerdings nichtlinear gewählt. Die 15 Stützstellen lösen die Kennlinie in 16 Bereiche auf, die in einem Protokoll z.B. durch eine 4 bit-Codierung gekennzeichnet werden können. Hierbei ist der Bereich < (1) der erste Bereich und der Bereich >(15) der sechzehnte Bereich. Die Stützstellenverteilung wurde so gewählt, dass der Bereich 0,5% bis 2,5% Abbildungsfehler besonders fein aufgelöst wird, was technisch gut realisierbar ist, denn die normierten Feldstärkefaktoren sind hier sehr hoch ( das 30 bis 80 fache der Mindestfeldstärke). Die Stützstelle (15) kennzeichnet das Erreichen von 6dB ( Faktor 2 ) Restsicherheit gegenüber 100% Grenzluftspalt und ist für die Sicherheit des Fahrbetriebes eine relevante Information.

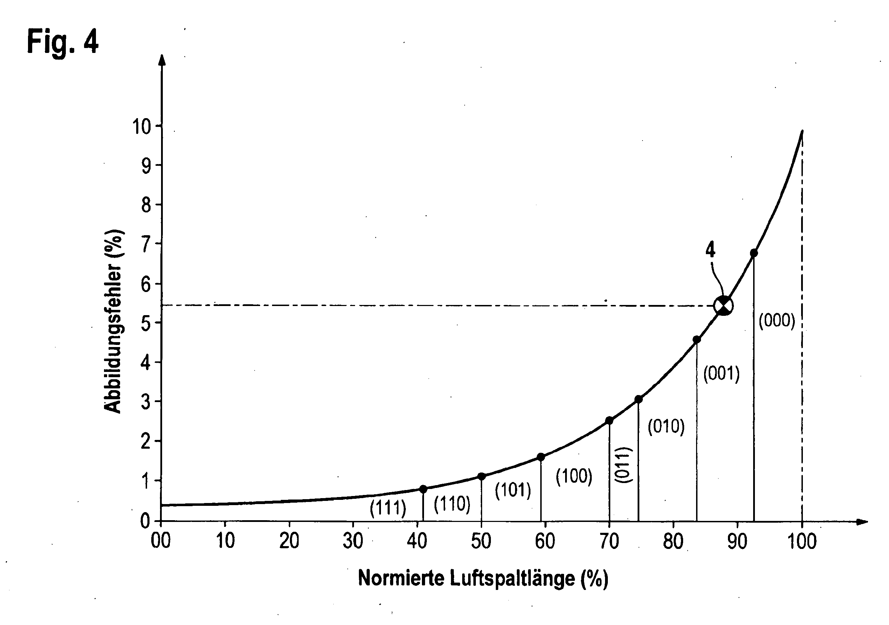

Die in Fig. 4 dargestellte Referenzkurve ist abhängig von den spezifischen Eigenschaften der beispielgemäßen Encoder-Sensor-Kombination bzw. abhängig von einem konkreten beispielhaften Raddrehzahlerfassungssystem. Für andere Raddrehzahlerfassungssysteme, insbesondere andere Encoder, wäre der Kurvenverlauf ähnlich, aber nicht exakt identisch. Deshalb ist es aufgrund der angestrebten Trennschärfe zweckmäßig für jede Sensor/Encoder-Kombination bzw. jedes Raddrehzahlerfassungssystem, einmal die spezifische Referenzkurve zu ermitteln. Es zeigt sich, dass mit der vorliegenden Auflösung in acht Bereiche bereits eine deutliche Verbesserung des Standes der Technik hinsichtlich der Bestimmung des Abbildungsfehlers erreicht wird. Im Vergleich zur in Fig.3 dargestellten Kurve wird in Fig. 4 auf die Darstellung der Hilfslinien und die Skalierung der normierten Feldstärke verzichtet. Als Beispiel für die Methode der Erkennung der Eigensicherheitsreserve am Beispiel der Drehrichtungserkennung ist hier Messpunkt 4 hervorgehoben, der ein Polteilungsrauschen bzw. einen Abbildungsfehler von ca. 5% aufweist, der im Experiment als derjenige Luftspaltbereich einmalig ermittelt wird, bei dem aufgrund des Polteilungsrauschens die exakte Erkennung der Drehrichtung nicht mehr gewährleistet ist. Beispielgemäß wird von der ECU kontrolliert, ob die gemessene Luftspaltfeldstärke den zugehörigen Kurvenbereich, im Beispiel (010), nicht überschreitet. Wird dieser Bereich in Richtung (001), (000) überschritten, so wird dies beispielgemäß als unzulässig betrachtet und von der Regelung berücksichtigt. Alternativ beispielhaft bzw. technisch weiterführend ist es zweckmäßig, die magnetische Feldstärke im Luftspalt mit, insbesondere mindestens, 4 bis 6 bit aufzulösen, was entsprechend höhere Anforderungen an die Empfindlichkeit und Präzision des Raddrehzahlsensors stellt.

In Abhängigkeit des mindestens einen mit einem Abbildungsfehlers behafteten Raddrehzahlsignals werden beispielgemäß interne Algorithmen oder Werte des Kraftfahrzeugregelungssystems umgeschaltet, bzw. angepasst. Der jeweilige Abbildungsfehler ist charakterisiert durch den Flankenabstand der Raddrehzahlimpulse.

In einer weiteren beispielhaften Anwendung in Bezug auf die Optimierung von Regelstrategien für elektronische Bremssysteme (EBS) dient das vorgeschlagene Verfahren zur radindividuellen Anpassung der Regelschwellen an die zugehörigen radindividuellen Istwerte der Abbildungsfehler der Encoder.

Beispielgemäß wird zur Anpassung aller Regelschwellen an das Polteilungsrauschen der maximale Abbildungsfehler aller Raddrehzahlerfassungssysteme des Fahrzeugs herangezogen. Dies ist vorteilhaft bezüglich der Robustheit gegen Schleudern.

In einer weiteren Beispielanwendung wird zur Anpassung aller Regelschwellen an das Polteilungsrauschen der minimale Abbildungsfehler aller vier Raddrehzahlerfassungssysteme des Fahrzeugs herangezogen. Dies bietet Vorteile hinsichtlich einer Schlechtwegerkennung.

In einer beispielgemäßen Anwendung wird von der ECU neben der mittleren magnetischen Feldstärke zusätzlich oder alternativ die Modulation der Luftspaltfeldstärke als Funktion des Encoderdrehwinkels erfasst, um periodische Schwankungen während des Umlaufs zu erkennen und diese durch rechnerische Gegenmaßnahmen zu kompensieren.

In einer weiterführenden Beispielanwendung wird die erforderliche Anzahl von Periodenvergleichszeiten bei einer Reifendruckverlusterkennung (DDS: Deflation Detection System) entsprechend der Abbildungsfehler angepasst. Drehzahlgeber werden in einen Regler derart eingelesen, dass pro Auswerteintervall jeweils eine steigende und eine fallende Flanke mit einem Zeitstempel vorliegen und mit der Information über die Summe der Flanken in der Recheneinheit ausgewertet werden. In einer speziellen Ausprägung des vorgeschlagenen Verfahrens wird die Information über die Genauigkeit bzw. den Abbildungsfehler des aktuellen Signals wie folgt verwendet: Die Zeitmessung erfolgt über eine Wegstrecke s. An diese Wegstrecke wird eine bestimmte Anforderung bezüglich der Genauigkeit gestellt. Nun wird in Abhängigkeit von der Genauigkeit des Raddrehzahlsignals, die Wegstrecke so verlängert, dass die definierte Genauigkeit erreicht werden kann. Dabei wird berücksichtigt, dass sich der Encoder-Abbildungsfehler als schwankender Zeitabstand zwischen den Flanken des Raddrehzahlsignals darstellt. Dieser schwankende Zeitabstand wird auch als Jitter des Raddrehzahlsignals bewertet. Um die Basis zur Beurteilung eines potentiellen Raddruckverlustes zu verbessern, passt man die Datenmenge dem Encoder-Abbildungsfehler und damit dem Jitter des Raddrehzahlsignals entsprechend an. Dabei wird die Anpassung der, in die spätere Berechnung mit einbezogene, Datenmenge des Raddrehzahlsignals vor der Berechnung der für einen potentiellen Reifendruckverlust benötigten Referenzwerte durchgeführt. Idealerweise wird eine Wegstrecke s verwendet, die eine ganzzahlige Vielfache des Radumfangs beträgt.

In einer anderen beispielgemäßen Anwendung nutzt man das vorgeschlagene Verfahren als Diagnosefunktion. Dabei wird die Größe des erfassten Istwertes des Polteilungsrauschens als Maß der Eigensicherheitsreserve des individuellen Raddrehzahlerfassungssystems gegenüber dem Verlust von sensorischen Teilfunktionen verwendet. Alternativ beispielhaft werden bestimmte Regelschwellen oder die Drehrichtungserkennung als solche Teilfunktionen überwacht, bzw. werden solche Teilfunktionen durch eine Diagnosefunktion gewährleistet.

Beispielsweise können Regelungssysteme bei Verwendung des vorgeschlagenen Verfahrens auch auf folgende Art verbessert werden. Typischerweise werden bestimmte Schwellen definiert oder ermittelt. Diese müssen für den Betrieb der Regelung überschritten werden. Eine dieser Schwellgrößen ist beispielsweise der Schlupf. Ist bezüglich der Sensorsignale eine bestimmte Ungenauigkeit bzw. ein bestimmter Abbildungsfehler bekannt, so lässt sich die Regelschwelle in folgender Weise beispielhaft anpassen: Schwelle = ideale Schwelle + Toleranz. Dabei ist die ideale Schwelle der tatsächliche Schwellenwert, bei dem theoretisch die Regelung einsetzen soll. Die Toleranz ist die, insbesondere aus dem Abbildungsfehler resultierende, Abweichung der Raddrehzahlsignale von den theoretischen, idealen Signalen, welche nicht mit Störungen und Abweichungen bezüglich der Encoderbewegung behaftet sind. Beispielhaft werden die Regelschwellen bezüglich des Schlupfes anhand der Fahrzeuggeschwindigkeit folgendermaßen berechnet: V_{schwelle} = V_{idealeSchwelle} + Toleranz. Unter der Annahme, dass der Abbildungsfehler bei 6% liegt und eine Fahrzeuggeschwindigkeit von 100km/h vorliegt, so ergibt sich eine Genauigkeit des Toleranzsignals von 6km/h. Somit wäre bei einer V_{idealeSchwelle} = 10km/h und einer Toleranz von 0,6km/h eine Mindestschwelle von V_{schwelle} = 10,6km/h anzusetzen. Die Wahl der Toleranz von 0,6 km/h erfolgt, um auch geringe Fehlregelungen mit hoher Sicherheit auszuschließen. Reduziert sich der Abbildungsfehler auf 4%, so führt dies zu einer Toleranz von 0,4km/h, so dass von einer V_{schwelle} = 10,4km/h und damit einer besseren Regelgüte auszugehen ist. Soll ein bestimmter Wert als Regelschwelle eingestellt werden so gelten die Toleranzen in beide Richtungen. Dies wird an folgendem Beispiel verdeutlicht: V_{idealeSchwelle} = 10km/h soll eingeregelt werden. Die Toleranz liegt bei 0,6km/h. Dies bedeutet, dass für +- den Toleranzwert die Regelschwellen zu definieren sind, d.h. bei Überschreiten 10,6km/h und bei Unterschreiten 9,4km/h.

Folgende Regelstrategien sind beispielhaft zur Ergänzung des vorgeschlagenen Verfahrens vorgesehen:
- Es wird immer die maximale Güte zur Regelung angesetzt, bzw. die Regelschwellen werden nach oben hin angepasst um Fehlregelungen weitestgehend auszuschließen.
- Es wird immer die Güte des schlechtesten Signals verwendet, insbesondere die Güte des schlechtesten Raddrehzahlsignals aller Räder, für den Fall das beispielsweise das Linke und das Rechte Raddrehzahlerfassungssystem einer Achse unterschiedliche Toleranzsignale aufweisen, bzw. deren Signale mit einem bestimmten, unterschiedlichen, tatsächlichen Abbildungsfehler behaftet sind. Dabei werden alternativ beispielhaft auch achsenweise und diagnonal die Toleranzen bzw. Abbildungsfehler entsprechend betrachtet und jeweils die maximale Toleranz des jeweiligen Toleranzpaares ermittelt.
- Die gesamte Regelung wird dynamisch, insbesondere periodisch, an die bestimmten Abbildungsfehler der Raddrehzahlerfassungssysteme adaptiert.
- Je nach Größe der Abbildungsfehler werden Werte aus elektronisch gespeicherten Datensätzen selektiert und verwendet. Dabei können beispielsweise insbesondere die Regelschwellen nicht variable angepasst werden, sondern werden je nach Genauigkeit der Raddrehzahlsignale, bzw. nach Größe der Abbildungsfehler umgeschaltet.
- Weiterführend wird beispielsweise die Regelung im Fall großer Abbildungsfehler, z.B. wenn diese über einem Wert liegen, der entsprechend der Kennlinie mit einer Feldstärke korrespondiert, welche unterhalb der Grenzfeldstärke liegt oder im Fall das relevante Störungen auftreten, definiert abgeschaltet. Dabei bleibt die Fahrstabilität des Fahrzeugs gewährleistet.

## Patentansprüche

1. Verfahren zur Bestimmung des Abbildungsfehlers in einem Raddrehzahlerfassungssystem, bestehend aus einem magnetischen Encoder (E), der mit dem Rad rotiert und der über einen Luftspalt (M), welcher eine bestimmte Länge (L) aufweist, mit einem Raddrehzahlsensor (S) magnetisch gekoppelt ist, wobei der Raddrehzahlsensor (S) sowohl die Raddrehzahl als auch die mittlere magnetische Feldstärke im Luftspalt erfassen und definiert elektronisch ausgeben kann und einer elektronischen Kontrolleinheit (ECU), **dadurch gekennzeichnet, dass**
während eines konkreten Fahrzustandes des Kraftfahrzeugs der Raddrehzahlsensor (S) die mittlere Magnetfeldstärke im Luftspalt (M) misst, wonach der tatsächliche Abbildungsfehler der Polteilung des Encoders (E), mit dem die Daten des Raddrehzahlsensors (S) behaftet sind, aus der mittleren Magnetfeldstärke im magnetischen Luftspalt (M) und der Auswertung einer Referenzkennlinie, welche elektronisch gespeichert ist und den Zusammenhang zwischen normierter Luftspaltlänge und Abbildungsfehler und normierter Feldstärke angibt, ermittelt wird.

2. Verfahren nach Anspruch 1, **dadurch gekennzeichnet, dass** die Ermittlung der mittleren magnetischen Feldstärke im magnetischen Luftspalt (M) durch den Sensor (S) während eines konkreten Fahrzustandes des Kraftfahrzeugs stattfindet, bei dem sich das Kraftfahrzeug in einem gleichförmigen Fahrzustand befindet.

3. Verfahren nach Anspruch 1 oder 2, **dadurch gekennzeichnet, dass** die Referenzkennlinie, die in der elektronischen Kontrolleinheit (ECU) gespeichert ist, mit gleichen Komponenten des Raddrehzahlerfassungssystems zunächst für einen bestimmten Fahrzeugtyp oder eine bestimmte Fahrzeugklasse über das Raddrehzahlerfassungssystem eines Typs/einer Klasse festgelegt wird, wobei dieses vor dem Einbau in das Fahrzeug geschieht.

4. Verfahren nach mindestens Anspruch 1 bis 3, **dadurch gekennzeichnet, dass** innerhalb des Raddrehzahlsensors die magnetische Feldstärke im Luftspalt in Intervalle eingeteilt wird, welche bitcodiert sind und welche Bereiche angeben, in denen das Feldstärkesignal sinnvoll innerhalb einer festen Anzahl von Intervallen codiert werden kann.

5. Verfahren nach mindestens Anspruch 1 bis 4, **dadurch gekennzeichnet, dass** das jeweilige Kraftfahrzeugregelungssystem, insbesondere ABS, ASR, oder ESP-System, an den jeweiligen tatsächlichen Abbildungsfehler der Polteilung des jeweiligen Encoders adaptiert wird.

6. Verfahren nach mindestens Anspruch 1 bis 5, **dadurch gekennzeichnet, dass** das jeweilige Kraftfahrzeugregelungssystem in Abhängigkeit des tatsächlichen Encoder-Abbildungsfehlers interne Algorithmen umschaltet und dass in Abhängigkeit des tatsächlichen Encoder-Abbildungsfehlers Daten aus bereits gespeicherten Datensätzen vom Kraftfahrzeugregelungssystem ausgewählt werden.

7. Verfahren nach mindestens Anspruch 1 bis 6, **dadurch gekennzeichnet, dass** das jeweilige Kraftfahrzeugregelungssystem oder die elektronische Kontrolleinheit (ECU) innerhalb bestimmter Zeitabstände, insbesondere innerhalb eines bestimmten Regelungszyklus, selbstständig eine neue Berechnung des tatsächlichen Encoder-Abbildungsfehlers initiiert.

8. Verfahren nach mindestens Anspruch 1 bis 7, **dadurch gekennzeichnet, dass** die Werte der tatsächlichen, während der Fahrt ermittelten, Encoder-Abbildungsfehler für jede Achse oder für jeweils alle vier Räder aufgenommen und elektronisch abgespeichert werden.

9. Verfahren nach mindestens Anspruch 1 bis 8, **dadurch gekennzeichnet, dass** zur Adaption des Kraftfahrzeugregelungssystems ein Encoder-Abbildungsfehler, nämlich entweder der Größte oder der Kleinste, verwendet wird, auch wenn die Encoder-Abbildungsfehler der jeweiligen Raddrehzahlerfassungssysteme unterschiedlich sind.

10. Verfahren nach mindestens Anspruch 1 bis 9, **dadurch gekennzeichnet, dass** der zeitliche Verlauf der magnetischen Feldstärke im Luftspalt als Funktion des Encoderdrehwinkels erfasst wird, wobei periodische Schwankungen der magnetischen Feldstärke erfasst werden und dass die periodischen Schwankungen der magnetischen Feldstärke im Luftspalt durch das Raddrehzahlerfassungssystem oder das Kraftfahrzeugregelungssystem kompensiert werden.

11. Verfahren nach mindestens Anspruch 1 bis 10, **dadurch gekennzeichnet, dass** die jeweiligen Regelschwellen des Kraftfahrzeugregelungssystems für ein Rad an den jeweiligen tatsächlichen Encoder-Abbildungsfehler adaptiert werden.

12. Verfahren nach mindestens Anspruch 1 bis 11, **dadurch gekennzeichnet, dass** die Regelschwellen des Kraftfahrzeugregelungssystems an den maximalen oder minimalen tatsächlichen Encoder-Abbildungsfehler aller vier Raddrehzahlerfassungssysteme adaptiert werden.

13. Verfahren nach mindestens Anspruch 1 bis 12, **dadurch gekennzeichnet, dass** die Adaption des Kraftfahrzeugregelungssystems und seiner Regelschwellen in Abhängigkeit des Encoder-Abbildungsfehlers, wobei ein Mittelwert oder der kleinste oder der größte Wert verwendet werden kann, für alle Räder oder achsenweise oder diagonal durchgeführt wird, wobei insbesondere der durch den tatsächlichen Encoder-Abbildungsfehler hervorgerufene maximal mögliche Fehler eines Schwellenkennwertes, zur idealen Schwelle, die den tatsächliche Wert darstellt, bei der die Regelung einsetzen soll, addiert wird.

14. Verfahren nach mindestens Anspruch 1 bis 13, **dadurch gekennzeichnet, dass** aufgrund unterschiedlicher Encoder-Abbildungsfehler eine definierte Abschaltung der Regelung erfolgt, wobei das Kraftfahrzeug in einem stabilen Fahrzustand bleibt.

15. Verfahren nach mindestens Anspruch 1 bis 14, **dadurch gekennzeichnet, dass** der tatsächliche Encoder-Abbildungsfehler in die Berechnung zur Erkennung eines Reifendruckverlustes eines indirekt messenden Reifendruckverlusterkennungssystems (DDS) einfließt.

16. Verfahren nach mindestens Anspruch 1 bis 15, **dadurch gekennzeichnet, dass** die Informationsmenge, die für die Beurteilung eines potentiellen Reifendruckverlustes aus dem Raddrehzahlsignal herangezogen wird, an den Encoder-Abbildungsfehler, insbesondere proportional, angepasst wird.

17. Verfahren nach mindestens Anspruch 1 bis 16, **dadurch gekennzeichnet, dass** der von dem jeweiligen Raddrehzahlerfassungssystem ermittelte Encoder-Abbildungsfehler und dessen zeitlicher Verlauf zur Beurteilung der eigenen Funktionstüchtigkeit, insbesondere bezüglich der Drehrichtungserkennung und der Regelschwellen, eingesetzt wird.

18. Computerprogrammprodukt, **dadurch gekennzeichnet, dass** dieses einen Algorithmus umfasst, welcher ein Verfahren gemäß mindestens einem der vorhergehenden Ansprüche definiert.

## Claims

1. Method for determining the mapping error in a wheel speed sensing system, composed of a magnetic encoder (E) which rotates with the wheel and which is magnetically coupled to a wheel speed sensor (S) via an air gap (M) which has a certain length (L), wherein the wheel speed sensor (S) can sense both the wheel speed and the central magnetic field strength in the air gap and can output them in a defined electronic fashion to an electronic control unit (ECU), **characterized in that** during a specific driving state of the motor vehicle the wheel speed sensor (S) measures the central magnetic field strength in the air gap (M), after which the actual mapping error of the pole division of the encoder (E) which is present in the data of the wheel speed sensor (S), is determined from the central magnetic field strength in the magnetic air gap (M) and the evaluation of a reference characteristic curve which is stored electronically, and specifies the relationship between the standardized air gap length and the mapping error and the standardized field strength.

2. Method according to Claim 1, **characterized in that** the determination of the central magnetic field strength takes place in the magnetic air gap (M) by means of a sensor (S) during a specific driving state of the motor vehicle during which the motor vehicle is located in a constant driving state.

3. Method according to Claim 1 or 2, **characterized in that** the reference characteristic curve which is stored in the electronic control unit (ECU) is specified with the same components of the wheel speed sensing system at first for a specific vehicle type or a specific vehicle class by means of the wheel speed sensing system of a type/a class, wherein the latter takes place before the installation in the motor vehicle.

4. Method according to at least Claims 1 to 3, **characterized in that,** within the wheel speed sensor, the magnetic field strength in the air gap is divided into intervals which are bit-encoded and which specify regions in which the field strength signal can be appropriately encoded within a fixed number of intervals.

5. Method according to at least Claims 1 to 4, **characterized in that,** the respective motor vehicle control system, in particular ABS, traction control system, or ESP system, is adapted to the respective actual mapping error of the pole division of the respective encoder.

6. Method according to at least Claims 1 to 5, **characterized in that** the respective motor vehicle control system switches over internal algorithms as a function of the actual encoder mapping error, and **in that** data from already stored data records are selected from the motor vehicle control system as a function of the actual encoder mapping error.

7. Method according to at least one of Claims 1 to 6, **characterized in that** the respective motor vehicle control system or the electronic control unit (ECU) automatically initiates a new calculation of the actual encoder mapping error within certain time intervals, in particular within a certain control cycle.

8. Method according to at least Claims 1 to 7, **characterized in that,** the values of the actual encoder mapping errors which are determined during travel are recorded for each axle or respectively for all four wheels, and electronically stored.

9. Method according to at least Claims 1 to 8, **characterized in that** an encoder mapping error, specifically either the largest or the smallest, is used to adapt the motor vehicle control system, even if the encoder mapping errors of the respective wheel speed sensing systems are different.

10. Method according to at least Claims 1 to 9, **characterized in that** the time profile of the magnetic field strength in the air gap is sensed as a function of the encoder rotation angle, wherein periodic fluctuations in the magnetic field strength are sensed, and **in that** the periodic fluctuations in the magnetic field strength in the air gap are compensated by the wheel speed sensing system or the motor vehicle control system.

11. Method according to at least Claims 1 to 10, **characterized in that** the respective control thresholds of the motor vehicle control system for a wheel are adapted to the respective actual encoder mapping error.

12. Method according to at least Claims 1 to 11, **characterized in that** the control thresholds of the motor vehicle control system are adapted to the maximum or minimum actual encoder mapping error of all four wheel speed sensing systems.

13. Method according to at least Claims 1 to 12, **characterized in that** the motor vehicle control system and its control thresholds are adapted for all wheels or on an axle basis or diagonally as a function of the encoder mapping error, wherein a mean value or the smallest or the largest value can be used, wherein in particular the maximum possible error of a threshold characteristic value which is brought about by the actual encoder mapping error is added to the ideal threshold, which constitutes the actual value, at which the control is to start.

14. Method according to at least Claims 1 to 13, **characterized in that** defined deactivation of the control takes place on the basis of different encoder mapping errors, wherein the motor vehicle remains in a stable driving state.

15. Method according to at least Claims 1 to 14, **characterized in that** the actual encoder mapping error is included in the calculation for the detection of a tyre pressure loss of an indirectly measuring tyre pressure loss-detection system (DDS).

16. Method according to at least Claims 1 to 15, **characterized in that** the information quantity which is used for the assessment of a potential tyre pressure loss on the basis of the wheel speed signal is adapted to the encoder mapping error, in particular proportionally.

17. Method according to at least Claims 1 to 16, **characterized in that** the encoder mapping error which is determined by the respective wheel speed sensing system, and the time profile of said encoder mapping error are used to assess the functional capability of said system, in particular with respect to the detection of the direction of rotation and the control thresholds.

18. Computer program product, **characterized in that** the latter comprises an algorithm which defines a method according to at least one of the preceding claims.

## Revendications

1. Procédé de détermination de l'erreur de représentation d'un système de détection de la vitesse de rotation d'une roue constitué
d'un codeur magnétique (E) qui tourne avec la roue et qui est couplé magnétiquement à un détecteur (S) de vitesse de rotation de roue par l'intermédiaire d'un entrefer (M) qui présente une longueur (L) définie,
le détecteur (S) de vitesse de rotation de roue pouvant à la fois détecter la vitesse de rotation de la roue l'intensité moyenne du champ magnétique dans l'entrefer et la transmettre électroniquement de manière définie, et
d'une unité électronique de contrôle (ECU), **caractérisé en ce que**
pendant un état de roulage concret du véhicule automobile, le détecteur (S) de vitesse de rotation de roue mesure l'intensité moyenne du champ magnétique dans l'entrefer (M), suite à quoi l'erreur effective de représentation de la division polaire du codeur (E) qui affecte les données du détecteur (S) de vitesse de rotation de roue est déterminée à partir de l'intensité moyenne du champ magnétique dans l'entrefer magnétique (M) et de l'évaluation d'une ligne caractéristique de référence conservée en mémoire électronique et qui donne l'intensité normalisée du champ et l'association entre une longueur normalisée de l'entrefer et l'erreur de représentation.

2. Procédé selon la revendication 1, **caractérisé en ce que** la détermination de l'intensité moyenne du champ magnétique dans l'entrefer magnétique (M) par le détecteur (S) a lieu pendant un état de roulage concret du véhicule automobile dans lequel le véhicule automobile se trouve dans un état de roulage constant.

3. Procédé selon les revendications 1 ou 2, **caractérisé en ce que** la ligne caractéristique de référence conservée en mémoire dans l'unité électronique de contrôle (ECU) est d'abord définie avec les mêmes composants du système de détection de la vitesse de rotation des roues pour un type défini de véhicule ou une classe définie de véhicule par le système de détection de la vitesse de rotation de roue d'un type et/ou d'une classe et **en ce que** cette opération a lieu avant le montage dans le véhicule.

4. Procédé selon au moins les revendications 1 à 3, **caractérisé en ce que** l'intensité du champ magnétique dans l'entrefer est divisée à l'intérieur du détecteur de vitesse de rotation de roue en intervalles qui sont codés en bits et qui indiquent les zones dans lesquelles le signal d'intensité du champ peut être codé utilement à l'intérieur d'un nombre fixe d'intervalles.

5. Procédé selon au moins l'une des revendications 1 à 4, **caractérisé en ce que** le système concerné de régulation du véhicule automobile, en particulier un système ABS, ASR ou ESP, est adapté aux erreurs effectives de représentation de la division polaire de chaque codeur.

6. Procédé selon au moins les revendications 1 à 5, **caractérisé en ce que** le système concerné de régulation du véhicule se commute entre des algorithmes internes en fonction de l'erreur effective de représentation du codeur et **en ce qu'**en fonction de l'erreur effective de représentation du codeur, des données sont sélectionnées dans des jeux de données préalablement conservés en mémoire dans le système de régulation du véhicule.

7. Procédé selon au moins l'une des revendications 1 à 6, **caractérisé en ce que** le système concerné de régulation du véhicule ou l'unité électronique de contrôle (ECU) lancent automatiquement un nouveau calcul de l'erreur effective de représentation du codeur à des intervalles de temps prédéterminés, en particulier à l'intérieur d'un cycle défini de régulation.

8. Procédé selon au moins l'une des revendications 1 à 7, **caractérisé en ce que** les valeurs de l'erreur effective de représentation du codeur déterminées pendant la conduite sont enregistrées pour chaque essieu ou pour les quatre roues et sont conservées électroniquement en mémoire.

9. Procédé selon au moins l'une des revendications 1 à 8, **caractérisé en ce que** même si les erreurs de représentation du codeur sont différentes pour les différents systèmes de détection de vitesse de rotation des roues, une erreur de représentation du codeur, à savoir la plus grande ou la plus petite, est utilisée pour adapter le système de régulation du véhicule automobile.

10. Procédé selon au moins l'une des revendications 1 à 9, **caractérisé en ce que** l'évolution temporelle de l'intensité du champ magnétique dans l'entrefer est détectée en fonction de l'angle de rotation du codeur, **en ce que** des variations périodiques de l'intensité du champ magnétique sont détectées et **en ce que** les variations périodiques de l'intensité du champ magnétique dans l'entrefer sont compensées par le système de détection de la vitesse de rotation des roues ou par le système de régulation du véhicule automobile.

11. Procédé selon au moins l'une des revendications 1 à 10, **caractérisé en ce que** les différents seuils de régulation du système de régulation du véhicule automobile sont adaptés pour une roue aux différentes erreurs effectives de représentation du codeur.

12. Procédé selon au moins l'une des revendications 1 à 11, **caractérisé en ce que** les seuils de régulation du système de régulation du véhicule automobile sont adaptés aux erreurs maximales ou aux erreurs minimales effectives de représentation du codeur des quatre systèmes de détection de la vitesse de rotation des roues.

13. Procédé selon au moins l'une des revendications 1 à 12, **caractérisé en ce que** l'adaptation du système de régulation du véhicule automobile et de ses seuils de régulation est réalisée en fonction de l'erreur de représentation du codeur pour les quatre roues, par essieu ou en diagonale en utilisant une valeur moyenne, la valeur la plus petite ou la valeur la plus grande, et **en ce qu'**en particulier l'erreur maximale possible d'une valeur caractéristique de seuil provoquée par l'erreur effective de représentation du codeur est ajoutée au seuil idéal qui représente la valeur effective à laquelle la régulation doit intervenir.

14. Procédé selon au moins l'une des revendications 1 à 13, **caractérisé en ce qu'**un débranchement défini de la régulation a lieu sur base des différentes erreurs de représentation de codeur, le véhicule automobile restant dans un étant de roulage stable.

15. Procédé selon au moins l'une des revendications 1 à 14, **caractérisé en ce que** l'erreur effective de représentation du codeur intervient dans le calcul de détection d'une perte de pression du bandage de roue d'un système (DDS) de détection d'une perte de pression de bandage de roue par mesure indirecte.

16. Procédé selon au moins l'une des revendications 1 à 15, **caractérisé en ce que** la quantité d'informations utilisées pour l'évaluation d'une perte potentielle de pression de bandage de roue à partir du signal de vitesse de rotation de roue est adaptée à l'erreur de représentation du codeur, en particulier de manière proportionnelle.

17. Procédé selon au moins l'une des revendications 1 à 16, **caractérisé en ce que** l'erreur de représentation du codeur déterminée par chaque système de détection de la vitesse de rotation des roues et son évolution temporelle sont utilisées pour évaluer le bon fonctionnement propre du système, en particulier la détection du sens de rotation et les seuils de régulation.

18. Produit de programme informatique, **caractérisé en ce qu'**il contient un algorithme qui définit un procédé selon au moins l'une des revendications précédentes.
